# EUROPEAN PATENT SPECIFICATION

(11) **EP 4 047 727 B1**
(45) Date of publication and mention of the grant of the patent: **02.04.2025**
(21) Application number: 22168629.8
(22) Date of filing: 11.11.2019
(51) Int. Cl.: H01M 50/20, H01M 50/258, H01M 50/242, H01M 50/262, B65D 45/16

(54) **BATTERY PACK CASE COMPRISING HOOK COUPLING STRUCTURE**
BATTERIEPACKGEHÄUSE MIT HAKENKOPPLUNGSSTRUKTUR
BOÎTIER DE BLOC-BATTERIE COMPRENANT UNE STRUCTURE DE COUPLAGE À CROCHET

(30) Priority: 15.11.2018 KR 20180140720; 15.11.2018 KR 20180140721
(43) Date of publication of application: 24.08.2022
(62) Divisional of application: 19883712.2
(73) Proprietor: LG ENERGY SOLUTION, LTD., Seoul 07335 (KR)
(72) Inventor: KIM, Sang Jin, 34122 DAEJEON (KR); JANG, Jae Young, 34122 DAEJEON (KR); SON, Young Su, 34122 DAEJEON (KR); LEE, Young Kyu, 34122 DAEJEON (KR)
(74) Representative: Plasseraud IP

(56) References cited:
- EP-A1- 2 207 223

## Description

### TECHNICAL FIELD

The present invention relates to a hook coupling structure and a battery pack case using same, and more particularly, to a hook coupling structure in which a structure body having the hook structure body provided therein is utilized, and a battery pack case using the same.

### BACKGROUND ART

Various means are used to couple injection-molded products to each other. For example, components are coupled to each other by using screws, or components are coupled to each other by using hooks and locking protrusions that are integrated with the component themselves.

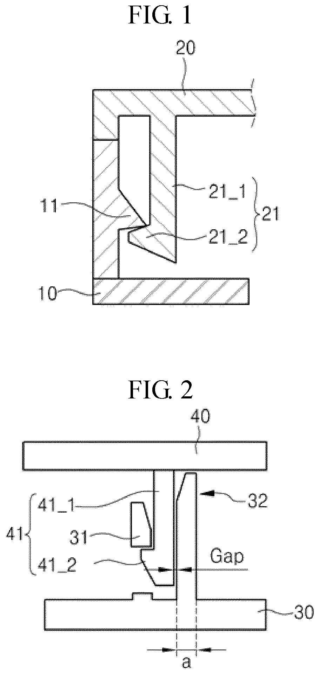

FIG. 1 is a side view of a hook coupling structure in accordance with the related art.

Referring to FIG. 1, the hook coupling structure typically provided in accordance with the related art includes a first structure 10 that is formed by injection molding and disposed as a lower component and a second structure 20 that is disposed above the first structure 10 and has a shape corresponding to the first structure 10.

The first structure 10 includes a locking projection 11 that protrudes outward from a predetermined area inside a side wall part, and the second structure 20 includes a hook part 21 that includes a body 21_1 and a protrusion part 21_2. The body is disposed at a position corresponding to the locking projection 11 and extends downward from the second structure 20, and the protrusion part extends from the body 21_1 and protrudes toward the locking projection 11.

Generally, the hook part 21 is elastically deformable by a predetermined amount. When the locking projection 11 of the first structure 10 and the protrusion part 21_2 of the second structure 20 are coupled to each other, the protrusion part 21_2 is locked in the locking projection 11 to couple the first structure 10 and the second structure 20, while the hook part 21 is moved back by the locking projection 11, elastically deformed by a certain amount, then recovered.

However, in the hook coupling structure in accordance with the related art, the hook part 21 is moved back and separated from the locking projection 11 when the entire structure is impacted after the first structure 10 and the second structure 20 are coupled to each other. As a result, the first structure 10 and the second structure 20 may be disconnected.

To solve the above-described problem, a structure for supporting the hook part is necessary. This will be described in detail in FIG. 2.

FIG. 2 is a side view of another hook coupling structure obtained by improving the hook coupling structure in accordance with the related art.

Referring to FIG. 2, another hook coupling structure includes a first structure 30 that is disposed as a lower component and a second structure 40 that is disposed above the first structure 30 and has a shape corresponding to the first structure 30. When applied to a battery pack, the first structure may serve as a lower case, and the second structure may serve as an upper case.

In the first structure 30, a locking projection 31 protrudes outward from a predetermined area inside a side wall part, and a support 32 extends upward from the first structure 30 and is spaced a predetermined interval from the locking projection 31.

In the second structure 40, a hook part 41 includes a body 41_1 that is disposed between the locking projection 31 and the support 32 and extends downward from the second structure 40 and a protrusion part 41_2 that extends from the body 41_1 and protrudes toward the locking projection 31.

The hook part 41 and the support 32 may be elastically deformed by a predetermined amount, and when the first structure 30 and the second structure 40 are coupled to each other, the hook part 41 is inserted between the locking projection 31 and the support 32. Accordingly, when the hook part 41 is inserted, the protrusion part 41_2 is locked in the locking projection 31 to couple the first structure 30 and the second structure 40, while the hook part 41 and the support 32 are elastically deformed by a certain amount and then recovered.

As the above-described structure includes the support 32 unlike the hook coupling structure in accordance with the related art, the first structure 30 and the second structure 40 may not be disconnected from each other even when the entire structure is impacted after the first structure 30 and the second structure 40 are coupled to each other.

Recently, reduction in sizes of diverse structure bodies has been a main issue to satisfy various demands of customers. However, since the support 22 is additionally required in the related art, a structure of the hook coupling structure may be complicated, and a space utilization rate may be deteriorated.

Thus, the development of technology for a hook coupling structure having an increased space utilization rate has been required.

### (PRIOR ART DOCUMENTS)

### JP1996-028209B

### JP6301893B

EP3766792 and EP2207223A1 describe a hook coupling structure for a battery pack.

### DISCLOSURE OF THE INVENTION

### TECHNICAL PROBLEM

The present invention provides a battery pack case according to claim 1, comprising a hook coupling structure for reducing a size of a structure body and a device according to claim 2, comprising said battery pack case.

### TECHNICAL SOLUTION

In accordance with an exemplary embodiment, a hook coupling structure includes: an upper structure body 110 including a hook part 111 that extends downward from an edge and has an end portion bent to the inside; and a lower structure body 120 including a protrusion part 121 and coupled to the upper structure body, the protrusion part being lifted upward from an edge and disposed inside the hook part 111, wherein the lower structure body includes a locking projection 130 that is formed, at a position corresponding to an upper portion of the hook part 111 of the upper structure body 110, by protruding an inner surface of the lower structure body outward.

Also, the hook part 111 is inserted between the locking projection 130 and the protrusion part 121 to establish a coupling.

The hook part may have: a first bent surface 111_1 that is a surface formed through bending and is in contact with the protrusion part 121 of the lower structure body; and a second bent surface 111_2 that is a surface formed through bending and is in contact with the locking projection 130.

The first bent surface of the hook part may have a thickness greater than or equal to that of the protrusion part.

The second bent surface of the hook part may have a thickness less than that of the locking projection.

An insertion-coupling ridge 140 may be defined between the locking projection and the protrusion part of the lower structure body so that a bent portion of the hook part is positioned therein.

In accordance with an exemplary embodiment, a battery pack case includes: a battery pack lower case 300 having an insertion-coupling ridge defined in a predetermined area of an edge; and a battery pack upper case 200 including a hook part 210 that has an end portion bent at a position corresponding to the insertion-coupling ridge of the battery pack lower case, wherein the insertion-coupling ridge of the lower case and the hook part of the upper case are coupled to each other to establish a hook coupling structure.

The battery pack lower case may include: a locking projection 310 positioned at a height to be in contact with an upper surface of the hook part and disposed on a plane adjacent to a plane in which the hook part is disposed, the locking projection protruding outward so that the hook part of the battery pack upper case is locked therein; and a protrusion part 320 positioned at a height to be in contact with a lower surface of the hook part and disposed on a plane identical to a plane in which the hook part is disposed, the protrusion part being lifted upward to support the hook part.

The hook part of the battery pack upper case may have: a first bent surface 211 that is a surface formed through bending and is in contact with the protrusion part 320 of the lower structure body; and a second bent surface 212 that is a surface formed through bending and is in contact with the locking projection 310.

An insertion-coupling ridge 330 may be defined between the locking projection and the protrusion part of the battery pack lower case so that the hook part is positioned therein.

In accordance with an exemplary embodiment, a device includes the battery pack case.

In accordance with another exemplary embodiment, a hook coupling structure includes: an upper structure body 510 including a hook part 511 that extends from an upper surface and has a protruding end portion; and a lower structure body 520 including a through-hole 530 and a locking projection 540, the through-hole formed by punching a predetermined area of a bottom surface so that a predetermined area of the hook part is disposed inside the bottom surface, the locking projection being formed, at a position corresponding to an upper portion of the hook part 511 of the upper structure body 510, by protruding an inner surface of the lower structure body outward.

Also, the predetermined area of the hook part is inserted into the through-hole to establish a coupling.

The bottom surface may include: a first bottom part 521 positioned on one side of the through-hole; and a second bottom part 522 positioned on the other side of the through-hole.

Among the first bottom part and the second bottom part, the bottom part in an area, in which the locking projection is not positioned, may support a predetermined area on a non-protruding side of the hook part.

An insertion-coupling ridge 550 may be defined between the locking projection of the lower structure and the through-hole so that a bent portion of the hook part is positioned to the inside thereof.

The bent portion of the hook part may have a thickness greater than that of an extension portion of the hook part.

The through-hole may have a size greater than or equal to the thickness of the bent portion.

In accordance with another exemplary embodiment, a battery pack case includes: a battery pack lower case 700 having an insertion-coupling ridge defined in a predetermined area on a bottom surface; and a battery pack upper case 600 including a hook part 610 with a bent portion 611 in which an end portion protrudes at a position corresponding to the insertion-coupling ridge of the battery pack lower case.

The insertion-coupling ridge of the lower case and the hook part of the upper case are coupled to each other to establish a hook coupling structure.

The battery pack lower case may include: a through-hole 730 formed by punching a predetermined area on the bottom surface of the battery pack lower case so that a predetermined area of the bent portion of the battery pack upper case is disposed to the inside; and a locking projection 740 positioned, while spaced a predetermined height from the through-hole, in a predetermined area that is on a side surface of the battery pack lower case and corresponds to the hook part of the battery pack upper case, wherein the bent portion of the battery pack upper case is locked in the locking projection.

The battery pack lower case may further include: a side wall part 710 positioned on one side of the through-hole; and a bottom part 720 positioned on the other side of the through-hole.

The bottom part may support a predetermined area on a non-protruding side of the bent portion of the hook part.

The insertion-coupling ridge 750 may be defined between the locking projection and the bottom surface so that the bent portion of the hook part is positioned between the locking projection and the through-hole of the bottom surface.

In accordance with another exemplary embodiment, a device includes the battery pack case.

### ADVANTAGEOUS EFFECTS

In the hook coupling structure in accordance with the embodiments of the present invention and the battery pack case using the same, a structure body is used instead of the support in accordance with the related art which is separately disposed to prevent the hook from being moved back, and thus the support may be removed to increase the space utilization rate.

### BRIEF DESCRIPTION OF THE DRAWINGS

FIG. 1 is a side view of a hook coupling structure in accordance with the related art.
FIG. 2 is a side view of another hook coupling structure obtained by improving the hook coupling structure in accordance with the related art.
FIG. 3 is a side view of a hook coupling structure in accordance with an example.
FIG. 4 is an enlarged side view of a hook part in accordance with an example.
FIG. 5 is a side view of the hook coupling structure before a hook part in accordance with an example is inserted.
FIG. 6 is a view of an inner structure of a battery pack case in accordance with an example.
(a) of FIG. 7 is a cross-sectional view taken along line A-A' in an area with a hook coupling structure within the battery pack case in accordance an example.
(b) of FIG. 7 is a cross-sectional view taken along line B-B' in an area without a hook coupling structure within the battery pack case in accordance with an example.

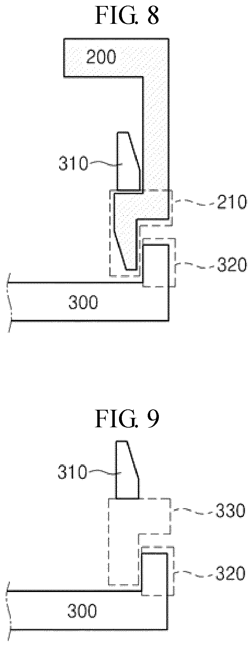

FIG. 8 is a side view of the hook coupling structure in the battery pack case in accordance with an example.
FIG. 9 is a side view of the hook coupling structure before a hook part in the battery pack case in accordance with an example is inserted.

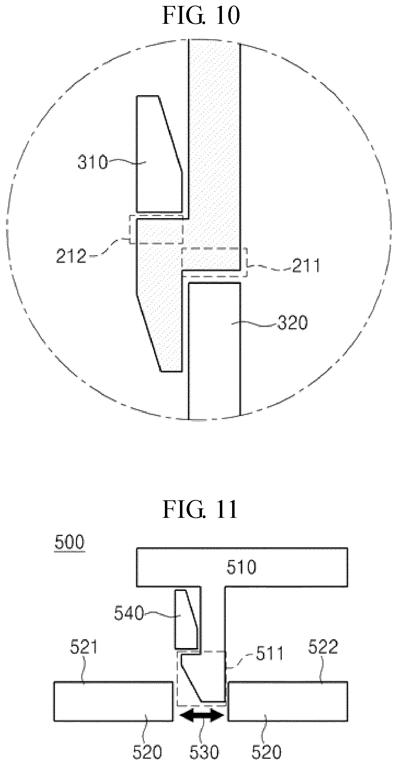

FIG. 10 is an enlarged side view of the hook part in the battery pack case in accordance with an example.
FIG. 11 is a side view of a hook coupling structure in accordance with another example.

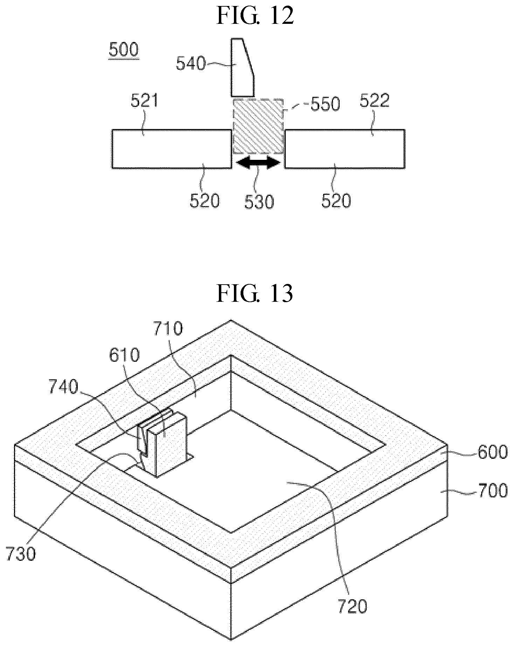

FIG. 12 is a side view of the hook coupling structure before a hook part in accordance with an example.
FIG. 13 is a view of an inner structure of a battery pack case in accordance with the embodiment of the present invention.

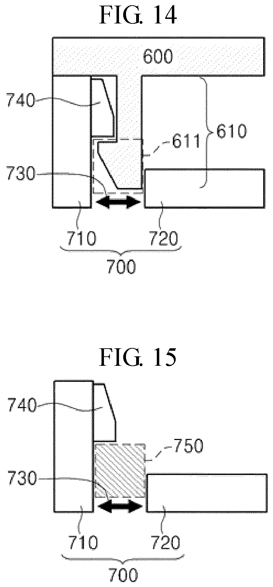

FIG. 14 is a cut side view of a hook coupling structure in the battery pack case in accordance with the embodiment of the present invention.
FIG. 15 is a cut side view of the hook coupling structure in the battery pack case before a hook part in accordance with the embodiment of the present invention is inserted.

### MODE FOR CARRYING OUT THE INVENTION

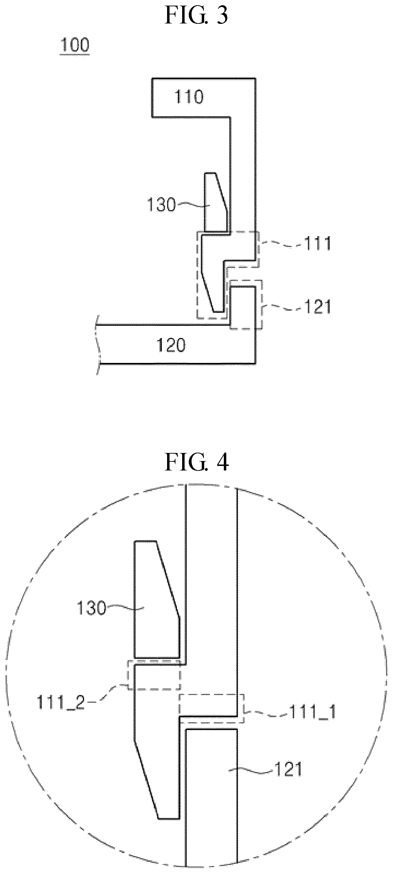

Hereinafter, embodiments of the present invention will be described in detail with reference to the Fig. 13-15. The embodiments illustrated in Fig. 3-12 are examples that do not fall under the definition of the claims.

Although the ordinal numbers such as first and second are used herein to describe various elements, these elements should not be limited by these numbers. The terms are only used to distinguish one component from other components. For example, a first element can be referred to as a second element, and similarly a second element can be referred to as a first element without departing from the scope of the present invention. The terms herein are used only for explaining a specific embodiment while not intended to limit the present invention. The expression of a singular form includes plural forms unless definitely indicating a particular case in terms of the context.

The terms used in the present invention are selected as general terms currently and widely used in consideration of functions of the present invention, but the terms may vary in accordance with the intention of those skilled in the art, precedents, or new technology in the art. Also, specific terms may be temporarily selected by the applicant, and in this case, the detailed meaning thereof will be described in the detailed description of the invention. Thus, the terms used in the present invention should be defined not as simple terms but based on the meaning of the terms and the overall description of the invention.

### <Embodiment 1> (not according to the claims)

Next, a hook coupling structure in accordance with an example will be described.

In the hook coupling structure in accordance with example, a protrusion is formed by lifting an edge of a lower structure body in which the hook coupling structure is provided, and a hook part is supported by the protrusion so that the hook part is not moved back after locked in a locking projection. Therefore, a space utilization rate of the hook coupling structure may increase.

FIG. 3 is a side view of the hook coupling structure in accordance with example.

Referring to FIG. 3, a hook coupling structure 100 includes an upper structure body 110 that includes a hook part 111 that extends downward from an edge and has an end portion bent to the inside, a lower structure body 120 that includes a protrusion part 121 lifted upward from an edge and disposed inside the hook part 111, and a locking projection 130 in which the hook part 111 of the upper structure body 110 is locked.

Also, the hook part is inserted between the locking projection 130 and the protrusion part 121 to establish a coupling.

A configuration of the hook coupling structure will be described below in more detail.

First, the upper structure body 110 includes the hook part 111 that extends downward from the edge and has the end portion bent to the inside, and is made of a material elastically deformable by a predetermined amount so as to be easily inserted between the locking projection 130 and the protrusion part 121.

The hook part 111 will be described in detail with reference to FIG. 4.

FIG. 4 is an enlarged side view of the hook part in accordance with an example.

Referring to FIG. 4, the hook part 111 includes a first bent surface 111_1 that is a surface formed through bending and is in contact with the protrusion part 121 of the lower structure body and a second bent surface 111_2 that is a surface formed through bending and is in contact with the locking projection 130.

Describing in more detail, the first bent surface 111_1 is a surface formed by bending once the edge of the upper structure body 110. For one example, the first bent surface 111_1 has a thickness equal to or greater by a predetermined range than that of an upper surface of the protrusion part 121.

When the thickness of the first bent surface 111_1 is less than that of the upper surface of the protrusion part 121, the end portion of the hook part 111 may not be sufficiently locked in the protrusion part 121. Also, when the thickness of the first bent surface 111_1 is excessively greater by the predetermined range than that of the upper surface of the protrusion part 121, a tight coupling is not established due to a gap between the end portion of the hook part 111 and the protrusion part 121 after the hook coupling. Thus, the first bent surface is provided having an appropriately large thickness.

Also, the second bent surface 111_2 is a surface that is formed by bending once again after the first bent surface 111_1 is formed by bending once. For one example, the second bent surface 111_2 has a thickness equal to that of a lower surface of the locking projection 130. When the thickness of the second bent surface 111_2 is less than that of the lower surface of the locking projection 130, the end portion of the hook part 111 may be separated from the locking projection after the hook coupling due to an impact on an assembly structure. Also, when the thickness of the second bent surface 111_2 is greater than that of the lower surface of the locking projection 130, the entire thickness of the hook coupling structure may increase.

Also, the end portion of the hook part 111 has one side having a parallel shape and the other side having a shape gradually narrowed downward, and thus may be easily inserted between the locking projection 130 and the protrusion part 121. The one side of the end portion of the hook part 111 has the parallel shape so that a force to be supported by the protrusion part 121 is not dispersed, but the shape of the one side is not limited thereto.

Also, the lower structure body 120 includes the protrusion part 121 that is lifted upward from the edge and disposed inside the hook part 111, and a height of the lifted protrusion part 121 is equal to a length of the end portion of the hook part 111 or greater than that of the end portion of the hook part. When the height of the lifted protrusion part 121 is less than the length of the end portion of the hook part 111, a supporting force of the hook part 111 is weak, and the coupling may not be maintained.

When comparing structures of the protrusion part 121 and the hook part 111 with those in accordance with the related art, the hook coupling structure in accordance with the related art as illustrated in FIG. 2 includes the first structure 30 that is disposed as the lower component and the second structure 40 that is disposed above the first structure 30 and has the shape corresponding to the first structure 30.

In the first structure 30, the locking projection 31 protrudes outward from the predetermined area inside the side wall part, and the support 32 extends upward from the first structure 30 and is spaced the predetermined interval from the locking projection 31.

Also, in the second structure 40, the hook part 41 includes the body 41_1 that is disposed between the locking projection 31 and the support 32 and extends downward from the second structure 40 and the protrusion part 41_2 that extends from the body 41_1 and protrudes toward the locking projection 31.

However, as a space-saving is required in the above-described hook coupling structure in accordance with the related art, the support 32 is removed from the hook coupling structure in accordance with the related art so as to improve the space efficiency, and the hook part 111 bent twice and the protrusion part 121 for supporting the hook part 111 are provided as in the present application. As a result, the space utilization of the hook coupling structure increases.

Also, the locking projection 130 is formed, at a position corresponding to an upper portion of the hook part 111 of the upper structure body 110, by protruding an inner surface of the lower structure body outward. The hook part 111 of the upper structure body 110 is locked in the locking projection 130.

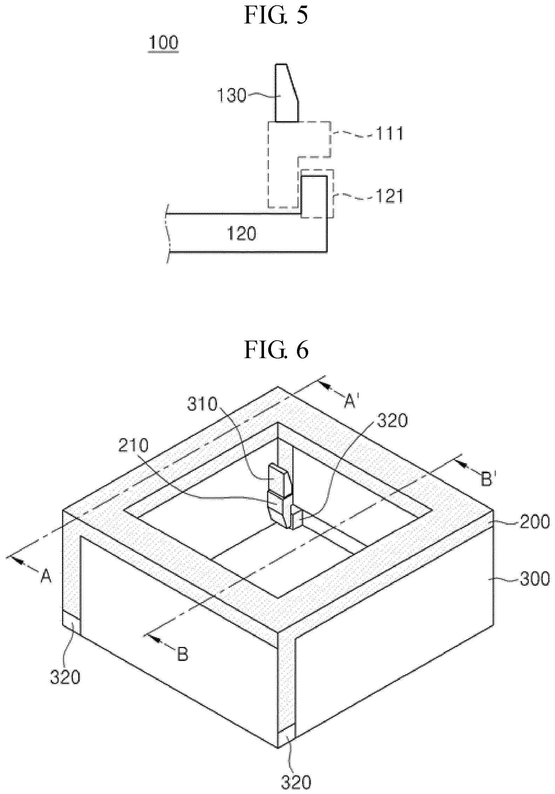

Also, an insertion-coupling ridge 140 is defined between the locking projection 130 and the protrusion part 121 so that the hook part 111 is positioned therein, which will be described in detail with reference to FIG. 5.

FIG. 5 is a side view of the hook coupling structure before the hook part in accordance with an example is inserted.

Referring to FIG. 5, a length of the insertion-coupling ridge 140 from a left corner to a right corner that is in contact with an upper surface of the protrusion part 121 is equal to a length from the first bent surface 111_1 to the second bent surface 111_2. Therefore, the hook part 111 may be easily inserted into the insertion-coupling ridge 140.

Also, the hook coupling structure is applied to various structure bodies of a case in which hook structure bodies are coupled to each other to create a predetermined space, thereby achieving a further improvement in space efficiency for the structure body when compared to the related art.

### <Embodiment 2> (not according to the claims)

Next, a battery pack case in accordance with example will be described.

The battery pack case is a battery pack case including the hook coupling structure in accordance with the above-described example. A hook part provided in a battery pack upper case is bent twice to define a predetermined space, and a protrusion lifted from an edge of a battery pack lower case is disposed inside the predetermined space of the hook part. As a result, the hook part may be supported without being moved back.

FIG. 6 is a view of an inner structure of the battery pack case in accordance with an example of the present invention. Here, FIG. 6 is a view in which a portion of an upper surface is cut to show the inside where a hook coupling structure is provided, but a structure of a battery pack upper case is typically provided in a shape in which the upper surface is fully covered.

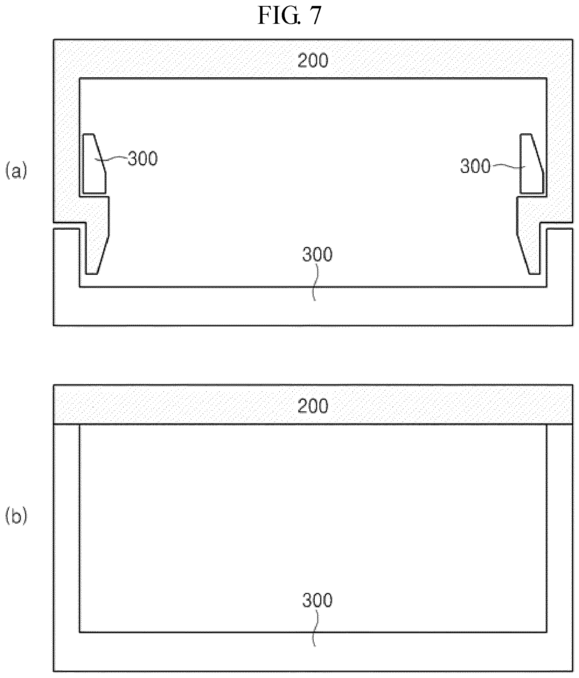

(a) of FIG. 7 is a cross-sectional view taken along line A-A' in an area with the hook coupling structure within the battery pack case and (b) of FIG. 7 is a cross-sectional view taken along line B-B' in an area without the hook coupling structure within the battery pack case.

FIG. 8 is a side view of the hook coupling structure in the battery pack case in accordance with an example.

Referring to FIGS. 6 to 8, the battery pack case includes a battery pack lower case 300 having an insertion-coupling ridge defined in a predetermined area of an edge and a battery pack upper case 200 including a hook part 210 that has an end portion bent at a position corresponding to the insertion-coupling ridge of the battery pack lower case.

Also, the insertion-coupling ridge of the lower case and the hook part of the upper case are coupled to each other to establish the hook coupling structure. Also, a plurality of hook coupling structures may be provided at corners to increase a coupling force between the upper case and the lower case, or a coupling structure may be provided over the entire edges of the case.

Describing in more detain with reference to FIGS 6 and 7, the hook coupling structure is provided at each of the corners of the battery pack upper case 200, and the hook coupling structure is provided at each of both sides as illustrated in the cross-sectional area taken along line A-A'. In the hook coupling structure, the hook part 210 extends from the battery pack upper case 200 over a predetermined range and is coupled to the battery pack lower case 300. Unlike the above-described structure, in an area taken along line B-B' in which the hook coupling structure is not provided, the battery pack upper case 200 has a height less by a predetermined range than a height in the area of line A-A'. This structure with the hook coupling structure and without the hook coupling structure may have a protrusion and recess shape to improve a coupling force for the structure itself.

A configuration of the battery pack case will be described below in more detail.

The lower case 300 has an insertion-coupling ridge 330 defined in a predetermined area of an edge, and will be described in detail with reference to FIG. 9.

FIG. 9 is a side view of the hook coupling structure before the hook part in the battery pack case in accordance with an example is inserted.

Referring to FIG. 9, in the battery pack lower case 300, the insertion-coupling ridge 330 is defined between the locking projection and a protrusion part of the battery pack lower case so that the hook part is positioned therein. A length of the insertion-coupling ridge 330 from a left corner to a right corner that is in contact with an upper surface of a protrusion part 320 is equal to a length from a first bent surface 211 to a second bent surface 212. Therefore, the hook part 210 may be easily inserted into the insertion-coupling ridge 330.

Also, the battery pack lower case 300 includes a locking projection 310 positioned at a height to be in contact with an upper surface of the hook part and disposed on a plane adjacent to a plane in which the hook part is disposed, the locking projection protruding outward so that the hook part of the battery pack upper case is locked therein, and the protrusion part 320 positioned at a height to be in contact with a lower surface of the hook part and disposed on a plane identical to a plane in which the hook part is disposed, the protrusion part being lifted upward to support the hook part.

Also, the locking projection 310 is formed, at a position corresponding to an upper portion of the hook part 111 of the upper structure body 110, by protruding an inner surface of the lower structure body outward. The hook part 111 of the upper structure body 110 is locked in the locking projection 130.

Also, the lower structure body 300 includes the protrusion part 320 that is lifted upward from the edge and disposed inside the hook part 211, and a height of the lifted protrusion part 320 is equal to a length of the end portion of the hook part 210 or greater than that of the end portion of the hook part. When the height of the lifted protrusion part 320 is less than the length of the end portion of the hook part 210, a supporting force of the hook part 210 is weak, and the coupling may not be maintained.

When comparing structures of the protrusion part 320 and the hook part 210 with those in accordance with the related art, the hook coupling structure in accordance with the related art as illustrated in FIG. 2 includes the first structure 30 that is disposed as the lower component and the second structure 40 that is disposed above the first structure 30 and has the shape corresponding to the first structure 30.

In the first structure 30, the locking projection 31 protrudes outward from the predetermined area inside the side wall part, and the support 32 extends upward from the first structure 30 and is spaced the predetermined interval from the locking projection 31.

Also, in the second structure 40, the hook part 41 includes the body 41_1 that is disposed between the locking projection 31 and the support 32 and extends downward from the second structure 40 and the protrusion part 41_2 that extends from the body 41_1 and protrudes toward the locking projection 31.

However, as a space-saving is required in the above-described hook coupling structure in accordance with the related art, the support 32 is removed from the hook coupling structure in accordance with the related art so as to improve the space efficiency, and the hook part 211 bent twice and the protrusion part 320 for supporting the hook part 211 are provided as in the present application. As a result, the space utilization of the hook coupling structure increases.

Also, the battery pack upper case 200 includes the hook part 210 that has an end portion bent at a position corresponding to the insertion-coupling ridge of the battery pack lower case. Here, the hook part 210 is made of a material elastically deformable by a predetermined amount so as to be easily inserted between the locking projection 310 and the protrusion part 320.

The hook part 210 includes the first bent surface 211 that is a surface formed through bending and is in contact with the protrusion part 320 of the lower structure body and the second bent surface 212 that is a surface formed through bending and is in contact with the locking projection 310, and will be described in more detail with reference to FIG. 9.

FIG. 10 is an enlarged side view of the hook part in the battery pack case in accordance with an example.

Referring to FIG. 10, the first bent surface 211 is a surface formed by bending once the edge of the upper case 200. For one example, the first bent surface 211 has a thickness equal to or greater by a predetermined range than that of an upper surface of the protrusion part 320.

When the thickness of the first bent surface 211 is less than that of the upper surface of the protrusion part 320, the end portion of the hook part 210 may not be sufficiently locked in the protrusion part 320. Also, when the thickness of the first bent surface 211 is excessively greater by the predetermined range than that of the upper surface of the protrusion part 320, a tight coupling is not established due to a gap between the end portion of the hook part 210 and the protrusion part 320 after the hook coupling. Thus, the first bent surface is provided having an appropriately large thickness.

Also, the second bent surface 212 is a surface that is formed by bending once again after the first bent surface 211 is formed by bending once. For one example, the second bent surface 212 has a thickness equal to that of a lower surface of the locking projection 310. When the thickness of the second bent surface 212 is less by a predetermined range than that of the lower surface of the locking projection 310, the end portion of the hook part 210 may be separated from the locking projection after the hook coupling due to an impact on an assembly structure. Also, when the thickness of the second bent surface 212 is greater than that of the lower surface of the locking projection 310, the entire thickness of the hook coupling structure may increase.

Also, the end portion of the hook part 210 has one side having a parallel shape and the other side having a shape gradually narrowed downward, and thus may be easily inserted between the locking projection 310 and the protrusion part 320. The one side of the end portion of the hook part 210 has the parallel shape so that a force to be supported by the protrusion part 320 is not dispersed, but the shape of the one side is not limited thereto.

Also, the battery pack case increases in space utilization, and thus may have a smaller battery pack case size or be equipped with more battery cells to achieve an enhanced capacity, when compared to the related art. As a result, a device including the above-described battery pack case may have a smaller size than the related art or a further increased capacity than the related art.

### <Embodiment 3> (not according to the claims)

Next, a hook coupling structure in accordance with an example will be described.

In the hook coupling structure a through-hole is defined in a predetermined area on a bottom surface of a structure body in which the hook coupling structure is provided. A predetermined area of a hook part is disposed within the defined through-hole, and the hook part is supported by the protrusion so that the hook part is not moved back after locked in a locking projection. Therefore, a space utilization rate of the hook coupling structure may increase.

FIG. 11 is a side view of a hook coupling structure.

FIG. 12 is a side view of the hook coupling structure before a hook part in accordance with an example is inserted.

Referring to FIGS. 11 and 12, a hook coupling structure 500 includes an upper structure body 510 including a hook part 511 that extends from an upper surface and has a protruding end portion and a lower structure body 520 including a through-hole 530 and a locking projection 540. The through-hole is formed by punching a predetermined area of a bottom surface so that a predetermined area of the hook part is disposed inside the bottom surface, and the locking projection is formed, at a position corresponding to an upper portion of the hook part 511 of the upper structure body 510, by protruding an inner surface of the lower structure body outward.

Also, the predetermined area of the hook part 511 is inserted into the through-hole to establish a coupling.

A configuration of the hook coupling structure will be described below in more detail.

First, the hook part 511 extends from the upper structure body 510 and has the protruding end portion. The hook part is made of a material elastically deformable by a predetermined amount so as to be easily inserted between the locking projection 540 and the through-hole 530.

Also, the hook part 511 has one side having a parallel shape and the other side having a shape gradually narrowed downward, and thus may be easily inserted between the locking projection 540 and the through-hole 530. The one side of the hook part 511 has the parallel shape so that a force to be supported by the bottom surface is not dispersed, but the shape of the one side is not limited thereto.

The hook part has a thickness greater than an extension portion of the upper structure body 510, and thus a force to be retained in the locking projection 540 may increase.

Also, the bottom surface 520 is a lower surface of a structure body in which the hook coupling structure is provided, and the bottom surface includes a first bottom part 521 and a second bottom part 522.

More particularly, the bottom surface 520 includes the first bottom part 521 positioned on one side of the through-hole and the second bottom part 522 positioned on the other side of the through-hole.

Among the first bottom part and the second bottom part, the bottom part in a direction, in which the locking projection is not positioned, supports a predetermined area on a non-protruding side of the hook part. In FIG. 11, the second bottom part supports the hook part 511 so that the hook part is not moved back.

Also, since space utilization increases as a gap between the predetermined area of the hook part 411 and the second bottom part 522 is small, the predetermined area of the hook part and the second bottom part are disposed with a minimum gap or without a gap.

The hook coupling structure in accordance with the related art as illustrated in FIG. 2 includes the first structure 30 that is disposed as a lower component and the second structure 40 that is disposed above the first structure 30 and has the shape corresponding to the first structure 30.

In the first structure 30, the locking projection 31 protrudes outward from the predetermined area inside the side wall part, and the support 32 extends upward from the first structure 30 and is spaced the predetermined interval from the locking projection 31.

Also, in the second structure 40, the hook part 41 includes the body 41_1 that is disposed between the locking projection 31 and the support 32 and extends downward from the second structure 40 and the protrusion part 41_2 that extends from the body 41_1 and protrudes toward the locking projection 31.

However, as a space-saving is required in the above-described hook coupling structure in accordance with the related art, the support 32 is removed from the hook coupling structure in accordance with the related art so as to improve the space efficiency, and the hook part 511 is supported by using the bottom surface 520 as in the present application. As a result, the space utilization of the hook coupling structure increases.

Also, the through-hole 530 is formed by punching a predetermined area of the bottom surface so that a predetermined area of a bent portion is disposed inside the bottom surface, and the through-hole has a size greater than or equal to a thickness of the bent portion. Thus, the hook part 511 may be disposed inside the through-hole 530 having the size greater than or equal to the thickness of the hook part 511.

Also, the locking projection 540 is positioned, while spaced a predetermined height above from the through-hole, and the bent portion of the hook part is locked therein. A distance between the locking projection 540 and the second bottom part 522 is greater than the thickness of the hook part 511 of the hook part.

Also, an insertion-coupling ridge 550 is defined between the locking projection and the through-hole of the bottom surface so that the bent portion of the hook part is positioned therein.

Also, the hook coupling structure is applied to various structure bodies of a case in which hook structure bodies are coupled to each other to create a predetermined space, thereby achieving a further improvement in space efficiency for the structure body when compared to the related art.

### <Embodiment 4>

Next, a battery pack case in accordance with the present invention will be described.

The battery pack case in accordance with the present invention is a battery pack case including the hook coupling structure in accordance with the above-described embodiment. A hook part is supported by a bottom surface of a battery pack lower case 700 so that the support part is not moved back.

FIG. 13 is a view of an inner structure of the battery pack case in accordance with the present invention. Here, FIG. 13 is a view in which a portion of an upper surface is cut to show the inside where a hook coupling structure is provided, but a structure of a battery pack upper case is typically provided in a shape in which the upper surface is fully covered.

Referring to FIG. 13, the battery pack case in accordance with the present invention includes a battery pack lower case 700 equipped with the battery module therein and having an insertion-coupling ridge defined in a predetermined area on a bottom surface and a battery pack upper case 600 including a hook part that has a bent portion in which an end portion protrudes at a position corresponding to the insertion-coupling ridge of the battery pack lower case.

Also, the insertion-coupling ridge of the lower case and the hook part of the upper case are coupled to each other to establish the hook coupling structure. Also, a plurality of hook coupling structures may be provided to increase a coupling force between the lower case and the upper case.

A configuration of the battery pack case will be described below in more detail.

The lower case 700 is equipped with the battery module therein and has the insertion-coupling ridge 750 defined in the predetermined area on the bottom surface, and will be described in detail with reference to FIG. 14.

FIG. 14 is a cut side view of a hook coupling structure in the battery pack case in accordance with the present invention.

Referring to FIG. 14, the battery pack lower case includes a through-hole 730 formed by punching a predetermined area on the bottom surface of the battery pack lower case so that a predetermined area of the bent portion of the battery pack upper case is disposed to the inside and a locking projection 740 positioned, while spaced a predetermined height from the through-hole, in a predetermined area that is on a side surface of the battery pack lower case and corresponds to the hook part of the battery pack upper case. The bent portion of the battery pack upper case is locked in the locking projection.

Also, the battery pack lower case further includes a side wall part 710 positioned on one side of the through-hole and a bottom part 720 positioned on the other side of the through-hole. The bottom part 720 supports a predetermined area on a non-protruding side of the bent portion of the hook part.

Also, the through-hole 730 has a size greater than or equal to a thickness of the bent portion so that the bent portion 611 is disposed to the inside.

The side wall part 710 and the bottom part 720 have a structure in which the hook coupling structure in accordance with the embodiment is applied to the battery pack case. The hook part 610 is coupled to the locking projection 740 and supported by the bottom part 720 so that the hook part is not moved back.

Also, since space utilization increases as a gap between the predetermined area of the bent portion 611 and the bottom part 720 is small, the predetermined area of the bent portion and the bottom part are disposed with a minimum gap or without a gap.

Also, the locking projection 740 protrudes from the side surface of the battery pack lower case to a predetermined area, and has a shape corresponding to the hook part 610.

Also, a hook coupling force increases as the surface area in contact with the hook part 610 increases. Thus, for one example, the locking projection has a thickness that is equal to a thickness of an extension portion of the hook part 610 in the upper case 600 and sufficient not to cause a reduction in a space utilization rate of the battery pack case.

Also, the battery pack upper case 600 includes the hook part 610 having the bent portion 611 in which an end portion protrudes at a position corresponding to the insertion-coupling ridge of the battery pack lower case.

The hook part 610 includes the bent portion 611 that extends from an upper surface of the structure body and has the protruding end portion, and the hook part is made of a material elastically deformable by a predetermined amount so as to be easily inserted between the locking projection 740 and the through-hole 730.

Also, the bent portion 611 has one side having a parallel shape and the other side having a shape gradually narrowed downward, and thus may be easily inserted between the locking projection 740 and the through-hole 730. The one side of the hook part 611 has the parallel shape so that a force to be supported by the bottom surface is not dispersed, but the shape of the one side is not limited thereto.

Also, the bent portion 611 of the hook part has a thickness greater than an extension portion of the hook part, and thus a force to be retained in the locking projection 740 may increase.

Also, the insertion-coupling ridge 750 is defined between the locking projection and the through-hole of the bottom surface so that the bent portion is positioned therein, and will be described in detail with reference to FIG. 15.

FIG. 15 is a cut side view of the hook coupling structure in the battery pack case before the hook part in accordance with the present invention is inserted.

Referring to FIG. 15, the insertion-coupling ridge 750 is a space which is defined between the locking projection 740 and the through-hole 730 and in which the bent portion 611 of the hook part is positioned, and a distance to the bottom part 720 is greater than a diagonal length of the bent portion 611 of the hook part. This configuration enables the bent portion 611 to be easily inserted into the insertion-coupling ridge 750 when the upper case 600 and the lower case 700 are coupled to each other.

Also, the battery pack case in accordance with the present invention increases in space utilization, and thus may have a smaller battery pack case size or be equipped with more battery cells to achieve an enhanced capacity, when compared to the related art. As a result, a device including the above-described battery pack case may have a smaller size than the related art or a further increased capacity than the related art.

Here, the technical idea of the present invention has been specifically described with reference to the above embodiments, but it should be noted that the foregoing embodiments are provided only for illustration while not limiting the present invention. Also, it will be understood by those skilled in the art that various embodiments can be made within the scope of the appended claims.

## Claims

1. A battery pack case comprising:
a battery pack lower case (700) having an insertion-coupling ridge (750) defined in a predetermined area on a bottom surface; and
a battery pack upper case (600) comprising a hook part (610) with a bent portion (611) in which an end portion protrudes at a position corresponding to the insertion-coupling ridge of the battery pack lower case,
wherein the insertion-coupling ridge of the lower case and the hook part of the upper case are coupled to each other to establish a hook coupling structure, and
wherein the battery pack lower case comprises:
a through-hole (730) formed by punching a predetermined area on the bottom surface of the battery pack lower case so that a predetermined area of the bent portion of the battery pack upper case is disposed to the inside; and
a locking projection (740) positioned, while spaced a predetermined height from the through-hole, in a predetermined area that is on a side surface of the battery pack lower case and corresponds to the hook part of the battery pack upper case, wherein the bent portion of the battery pack upper case is locked in the locking projection.
wherein the battery pack lower case further comprises:
a side wall part (710) positioned on one side of the through-hole; and
a bottom part (720) positioned on the other side of the through-hole,
wherein the bottom part supports a predetermined area on a non-protruding side of the bent portion of the hook part; and
wherein the insertion-coupling ridge (750) is a space which is defined between the locking projection (740) and the through-hole (730) and in which the bent portion (611) of the hook part (610) is positioned.

2. A device comprising the battery pack case of one of claim 1.

## Patentansprüche

1. Batteriepackgehäuse, umfassend:
ein unteres Batteriepackgehäuse (700), welches eine Einführung-Kopplungsleiste (750) aufweist, welche in einem vorbestimmten Bereich an einer Bodenfläche definiert ist; und
ein oberes Batteriepackgehäuse (600), welches einen Hakenteil (610) mit einem gebogenen Abschnitt (611) umfasst, in welchem ein Endabschnitt an einer Position hervorsteht, welche der Einführung-Kopplungsleiste des unteren Batteriepackgehäuses entspricht,
wobei die Einführung-Kopplungsleiste des unteren Gehäuses und der Hakenteil des oberen Gehäuses miteinander gekoppelt sind, um eine Haken-Kopplungsstruktur zu begründen, und
wobei das untere Batteriepackgehäuse umfasst:
ein Durchgangsloch (730), welches durch Lochen eines vorbestimmten Bereichs an der Bodenfläche des unteren Batteriepackgehäuses gebildet ist, sodass ein vorbestimmter Bereich des gebogenen Abschnitts des oberen Batteriepackgehäuse nach innen angeordnet ist; und
einen Sperrvorsprung (740), welcher, während er um eine vorbestimmte Höhe von dem Durchgangsloch beabstandet ist, in einem vorbestimmten Bereich positioniert ist, welcher an einer Seitenfläche des unteren Batteriepackgehäuses ist, und welcher dem Hakenteil des oberen Batteriepackgehäuses entspricht, wobei der gebogene Abschnitt des oberen Batteriepackgehäuses in dem Sperrvorsprung gesperrt ist,
wobei das untere Batteriepackgehäuse ferner umfasst:
einen Seitenwandteil (710), welcher an einer Seite des Durchgangslochs positioniert ist; und
einen Bodenteil (720), welcher an der anderen Seite des Durchgangslochs positioniert ist,
wobei der Bodenteil einen vorbestimmten Bereich an einer nichthervorstehenden Seite des gebogenen Abschnitts des Hakenteils haltert; und
wobei die Einführung-Kopplungsleiste (750) ein Raum ist, welcher zwischen dem Sperrvorsprung (740) und dem Durchgangsloch (730) definiert ist und in welchem der gebogene Abschnitt (611) des Hakenteils (610) positioniert ist.

2. Vorrichtung, umfassend das Batteriepackgehäuse nach Anspruch 1.

## Revendications

1. Boîtier de bloc-batterie comprenant :
un boîtier inférieur de bloc-batterie (700) ayant une nervure d'insertion-couplage (750) définie dans une zone prédéterminée sur une surface inférieure ; et
un boîtier supérieur de bloc-batterie (600) comprenant une partie crochet (610) avec une partie courbée (611) dans laquelle une partie d'extrémité fait saillie à une position correspondant à la nervure d'insertion-couplage du boîtier inférieur de bloc-batterie,
dans lequel la nervure d'insertion-couplage du boîtier inférieur et la partie crochet du boîtier supérieur sont couplées l'une à l'autre pour établir une structure de couplage à crochet, et
dans lequel le boîtier inférieur de bloc-batterie comprend :
un trou traversant (730) formé par perforation d'une zone prédéterminée sur la surface inférieure du boîtier inférieur de bloc-batterie de sorte qu'une zone prédéterminée de la partie courbée du boîtier supérieur de bloc-batterie soit disposée vers l'intérieur ; et une saillie de verrouillage (740) positionnée, tout en étant espacée d'une hauteur prédéterminée du trou traversant, dans une zone prédéterminée qui se trouve sur une surface latérale du boîtier inférieur de bloc-batterie et correspond à la partie crochet du boîtier supérieur de bloc-batterie, dans lequel la partie courbée du boîtier supérieur de bloc-batterie est verrouillée dans la saillie de verrouillage.
dans lequel le boîtier inférieur de bloc-batterie comprend en outre :
une partie paroi latérale (710) positionnée sur un côté du trou traversant ; et
une partie inférieure (720) positionnée sur l'autre côté du trou traversant,
dans lequel la partie inférieure supporte une zone prédéterminée sur un côté non saillant de la partie courbée de la partie crochet ; et
dans lequel la nervure d'insertion-couplage (750) est un espace qui est défini entre la saillie de verrouillage (740) et le trou traversant (730) et dans lequel la partie courbée (611) de la partie crochet (610) est positionnée.

2. Dispositif comprenant le boîtier de bloc-batterie selon la revendication 1.
